(19) Europäisches Patentamt
European Patent Office
Office européen des brevets

(11) **EP 1 727 998 B1**

(12) **FASCICULE DE BREVET EUROPEEN**

(45) Date de publication et mention
de la délivrance du brevet:
**15.07.2009 Bulletin 2009/29**

(21) Numéro de dépôt: **05739562.6**

(22) Date de dépôt: **16.03.2005**

(51) Int Cl.:
***F16C 39/06*** *(2006.01)*

(86) Numéro de dépôt international:
**PCT/FR2005/000626**

(87) Numéro de publication internationale:
**WO 2005/103517 (03.11.2005 Gazette 2005/44)**

(54) **PALIER MAGNETIQUE ACTIF A AUTO-DETECTION DE POSITION**

AKTIVES MAGNETLAGER MIT AUTOMATISCHER ERFASSUNG VON DESSEN POSITION

ACTIVE MAGNETIC BEARING WITH AUTOMATIC DETECTION OF THE POSITION THEREOF

(84) Etats contractants désignés:
**AT BE BG CH CY CZ DE DK EE ES FI FR GB GR HU IE IS IT LI LT LU MC NL PL PT RO SE SI SK TR**

(30) Priorité: **22.03.2004 FR 0402902**

(43) Date de publication de la demande:
**06.12.2006 Bulletin 2006/49**

(73) Titulaire: **SOCIETE DE MECANIQUE MAGNETIQUE**
**F-27950 Saint-Marcel (FR)**

(72) Inventeurs:
• **TREMAUDANT, Yann**
**F-78955 CARRIERES SOUS POISSY (FR)**
• **BRUNET, Maurice**
**F-27950 Sainte Colombe Pres Vernon (FR)**
• **SCHROEDER, Ulrich**
**F-76130 Mont Saint Aignan (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**EP-A- 1 312 822          US-A- 3 557 629**
**US-A- 5 216 308          US-A- 5 250 865**
**US-A- 5 844 339**

## Description

### Domaine de l'invention

La présente invention concerne les paliers magnétiques actifs dans lesquels, en plus de leur fonction de palier proprement dite, on réalise aussi la fonction de détection du type inductif et ce, sans adjoindre aucun circuit électromagnétique et aucun amplificateur autres que ceux utilisés pour la fonction de palier.

### Art antérieur

L'intégration de la fonction de détection de position du corps suspendu dans un palier magnétique actif, appelé palier à auto-détection, présente de nombreux avantages en termes de coût, de rationalisation et de précision de détection en comparaison avec les systèmes plus classiques dans lesquels la position du corps suspendu, tel qu'un rotor ou un disque, est mesurée à l'aide de détecteurs de position distincts des éléments du palier activateur produisant les forces nécessaires pour maintenir le corps dans une position de travail déterminée.

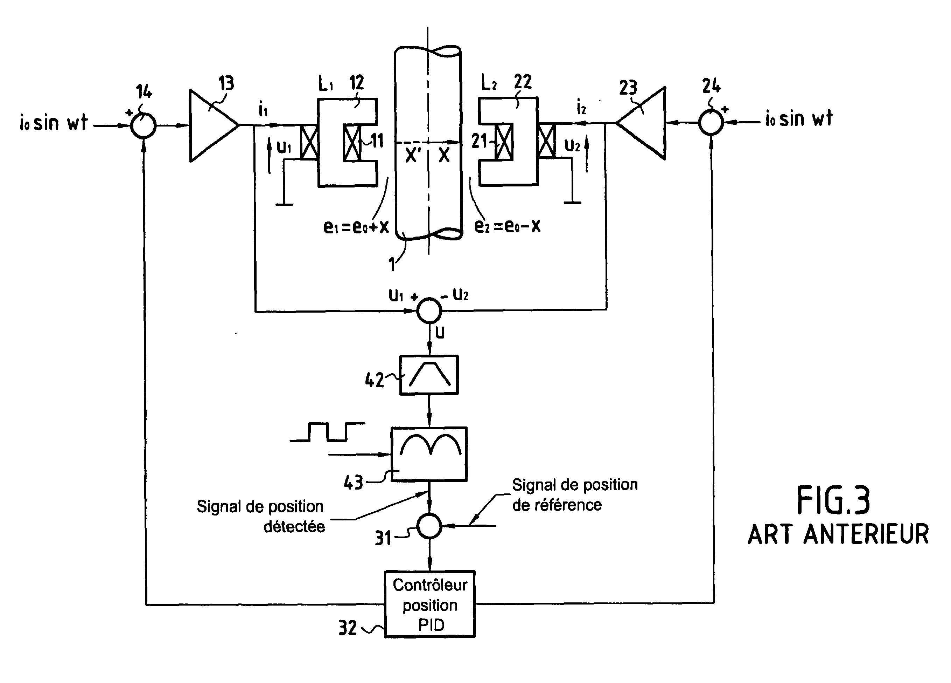

Le brevet US 5 844 339 (ou FR 2 716 700) décrit un dispositif de palier magnétique à auto-détection de position dont le principe de fonctionnement est illustré sur la figure 3. Sur la figure 3, un rotor 1 est maintenu suspendu par deux électro-aimants de palier antagonistes. Chaque électro-aimant comprend un circuit magnétique 12, respectivement 22, en matériau ferromagnétique en regard du rotor 1 lui-même en matériau ferromagnétique. Chaque électro-aimant comprend par ailleurs une bobine d'excitation 11, respectivement 21, qui est alimentée à partir d'un amplificateur de puissance 13, respectivement 23, recevant en entrée un courant principal d'entrée (courant de palier) qui permet de fournir en sortie aux bobines 11, 21 l'énergie nécessaire au maintien du rotor 1 dans sa position d'équilibre prédéterminée. Le courant de palier est issu de circuits d'asservissement 31, 32 ayant eux-mêmes reçu des informations sur la position réelle du rotor et prenant en compte une position de consigne.

Pour obtenir une information de position sans utiliser de détecteur de position distinct des électro-aimants du palier, on injecte simultanément, au moyen d'additionneurs 14, 24, un courant sinusoïdal en superposition au courant de palier. Comme décrit en détail dans le brevet US 5 844 339, la position radiale du rotor 1 suivant l'axe XX' peut être détectée à partir des tensions $U_1$ et $U_2$ mesurées aux bornes des bobines d'excitation 11 et 21 respectivement. En effet, les tensions $U_1$ et $U_2$ varient respectivement en fonction des inductances $L_1$ et $L_2$ des électro-aimants qui elle-mêmes varient suivant la position du rotor entre les électro-aimants du palier. Un signal représentatif de la position du rotor peut être alors obtenu après filtrage 42 et démodulation 43 (à la fréquence correspondante du signal de courant de détection injecté) de la tension U correspondant à la différence entre les tensions $U_1$ et $U_2$ mesurées en sortie des bobines. Ce signal est ensuite comparé à un signal de position de référence en entrée des circuits d'asservissement.

Ce dispositif est principalement utilisé avec les paliers magnétiques radiaux qui supportent les arbres rotatifs dans des machines tournantes telles que des turbopompes. Ainsi, la position radiale de l'arbre peut être mesurée grâce à la mesure de la variation de l'inductance dans le palier qui est fonction du déplacement radial de l'arbre.

Bien que le dispositif décrit dans le brevet US 5 844 339 fonctionne de façon satisfaisante, il présente toutefois quelques limitations qui empêchent d'élargir son champ d'application. En effet, dans ce dispositif, la fréquence porteuse du signal de courant injecté dans le palier pour la détection de position est volontairement choisie de manière à être nettement supérieure à la bande passante en boucle fermée des circuits d'asservissement pour ne pas perturber la fonction première des paliers, à savoir le maintien en position du rotor. Cette fréquence est typiquement de 20 KHz environ pour pouvoir disposer, après démodulation et filtrage d'une bande passante suffisante (au moins 1000Hz). De plus, pour conserver un rapport signal sur bruit satisfaisant, le rapport $\hat{\imath}_{porteuse}/I_{max}$ doit être supérieur à 0.01 ( avec $\hat{\imath}_{porteuse}=$ amplitude du courant injecté avec la porteuse et $I_{max}=$ courant maximum amplificateur), l'amplitude du courant io injecté est de l'ordre de 20 mA.

On rappelle que l'intérêt du palier auto-détecteur est de simplifier de manière significative la partie électromécanique du palier magnétique et de sa connectique en vue d'abaisser les coûts de production notamment dans le cas de matériels de série. Par conséquent, la technologie du palier auto-détecteur n'est justifiée que si elle n'engendre pas de surcoût au niveau de l'électronique associée. Le coût de l'électronique associée dépend de sa complexité mais aussi et surtout des performances requises pour les amplificateurs de puissance des paliers. Dans le cas du palier à auto-détection décrit ci-dessus, les amplificateurs doivent être dimensionnés en fonction de la tension que doit fournir le palier pour réaliser le maintien du rotor et non par rapport aux signaux utilisés pour la détection de position. Or, la tension de détection $\hat{U}_d$ mesurée en sortie du palier se calcule avec l'équation (1) suivante :

$$\hat{U}_d = L_{palier}\, \omega\, \hat{\imath}\ (1)$$

avec

- $\omega$ = pulsation de la porteuse (typiquement 20 kHz)
- $L_{palier}$ = inductance totale du palier vue à la fréquence de la porteuse

- î = amplitude courant porteuse

L'inductance $L_{palier}$ est proportionnelle à la taille (dimensions) du palier lui-même. L'inductance vue à la fréquence de la porteuse est la somme de l'inductance de fuite (pas de variations avec les variations d'entrefer) et d'une inductance qui varie avec l'entrefer. Dans un palier auto-détecteur radial, réalisé avec des tôles de faible épaisseur, l'inductance vue à la fréquence de la porteuse a environ la même valeur que l'inductance vue à la fréquence du palier. L'inductance de fuite est faible. L'inductance augmente avec la taille du palier lui-même.

Dans la pratique, pour conserver un rapport signal sur bruit satisfaisant, on s'attache à ce que l'amplitude du courant ($\hat{i}_{porteuse}$) de la porteuse corresponde à au moins 1% du courant maximum de l'amplificateur (ex. $\hat{i}p_{orteuse}$ >20 mA pour un amplificateur pouvant fournir jusqu'à 2 A maximum). L'équation (1) montre qu'à partir de certaines dimensions de palier, l'inductance $L_{palier}$ atteint des valeurs telles que pour satisfaire $\hat{i}_{porteuse}/I_{max}$ > 0.01, il faut utiliser une tension de détection qui devient supérieure à la tension nécessaire au maintien du rotor.

Dans les paliers axiaux qui utilisent en général un volant de butée massif et un stator non feuilleté ou très peu feuilleté, l'inductance vue à la fréquence de la porteuse est essentiellement une inductance de fuite. Il n'y a pratiquement pas d'inductance qui varie avec l'entrefer. Dans ce cas, le principe du palier auto-détecteur est difficilement réalisable.

D'autre part, dans un palier auto-détecteur conventionnel, il y a un couplage entre l"inductance à 20 KHz et le courant du palier, c'est-à-dire que l'inductance de l'électro-aimant diminue à mesure que le champ magnétique généré dans le palier augmente. Dans la pratique, ce couplage fausse l'information de position et augmente la sensibilité en fonction de la fréquence (génération de bruit dans l'asservissement). Il est possible toutefois de compenser l'effet de ce couplage dans l'électronique mais l'induction magnétique maximum générée doit pour cela rester en dessous de 1 tesla environ.

**Objet et description succincte de l'invention**

La présente invention vise à remédier aux inconvénients précités des paliers magnétiques radiaux et axiaux et à réaliser une structure de palier magnétique actif à auto-détection qui garantisse un niveau d'inductance (couplée avec l'entrefer) suffisant et ce, indépendamment des sources de perturbations environnantes tels que les dimensions et le courant du palier.

Ce but est atteint avec un palier magnétique actif à auto-détection de position comprenant au moins des premier et second électro-aimants antagonistes formant stators disposés de part et d'autre d'un corps ferromagnétique formant rotor maintenu sans contact entre ces électro-aimants, les premier et second électro-aimants comprenant chacun un circuit magnétique, comprenant essentiellement un premier matériau ferromagnétique et définissant avec ledit corps ferromagnétique un entrefer, et une bobine d'excitation alimentée à partir d'un amplificateur de puissance dont le courant d'entrée est asservi en fonction de la position du corps ferromagnétique par rapport aux circuits magnétiques des premier et second électroaimants, la position du corps ferromagnétique étant mesurée à partir de l'inductance détectée entre les deux électro-aimants en réponse à injection simultanément dans les deux électro-aimants antagonistes d'un courant sinusoïdal ayant une fréquence supérieure à la bande passante en boucle fermée du système,

et dans lequel, conformément à l'invention, le circuit magnétique de chaque électro-aimant comprend en outre une portion au voisinage de la bobine d'excitation utilisant un second matériau ferromagnétique ayant une perméabilité magnétique inférieure à celle du premier matériau et une résistivité électrique supérieure à celle du premier matériau de manière à favoriser le passage des champs magnétiques hautes fréquences générés dans le palier.

Ainsi, le palier magnétique selon l'invention comporte une portion de perméabilité et résistivité adaptées pour "canaliser" les lignes de champs magnétiques hautes fréquences utilisés pour l'auto-détection de position dans le palier. Une telle structure de palier permet de garantir des valeurs d'inductance à haute fréquence bien définies indépendamment des dimensions du palier et du courant d'alimentation de ce dernier.

Selon un mode de réalisation de l'invention, la portion de faible perméabilité et haute résistivité est formée d'une pièce en poudre comprenant des grains en matériau magnétique, tels que des grains de fer, isolés électriquement entre eux.

Le corps ferromagnétique formant le rotor peut comprendre aussi au moins une portion ayant une perméabilité inférieure et une résistivité supérieure à celle du reste du corps de manière à favoriser le passage des champs magnétiques hautes fréquences, ladite portion étant disposée sensiblement en regard de la portion de faible perméabilité et haute résistivité formée sur l'électro-aimant. Cette portion peut être formée d'une pièce en poudre comprenant des grains en matériau magnétique, tels des grains de fer, isolés électriquement les uns des autres ou de tôles ferromagnétiques de faible épaisseur suivant les cas.

La ou les portions de faible perméabilité et haute résistivité ménagées dans le palier présentent de préférence une perméabilité magnétique relative d'un ordre de grandeur de 100 et une résistivité électrique d'environ 50 $\Omega$m.

Le palier magnétique actif décrit ci-dessus s'applique aussi bien à des paliers de type axial qu'à des paliers de type radial.

**Brève description des dessins**

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 est une vue en demi-coupe axiale d'une structure de palier magnétique axial à auto-détection de position conformément à un mode de réalisation de la présente invention,
- la figure 2 est une vue en demi-coupe axiale d'une structure de palier magnétique radial à auto-détection de position conformément à un autre mode de réalisation de la présente invention,
- la figure 3 est un schéma fonctionnel d'un système de palier magnétique actif incorporant un système de détection de position utilisant les électro-aimants de palier selon l'art antérieur.

**Description détaillée de modes particuliers de réalisation**

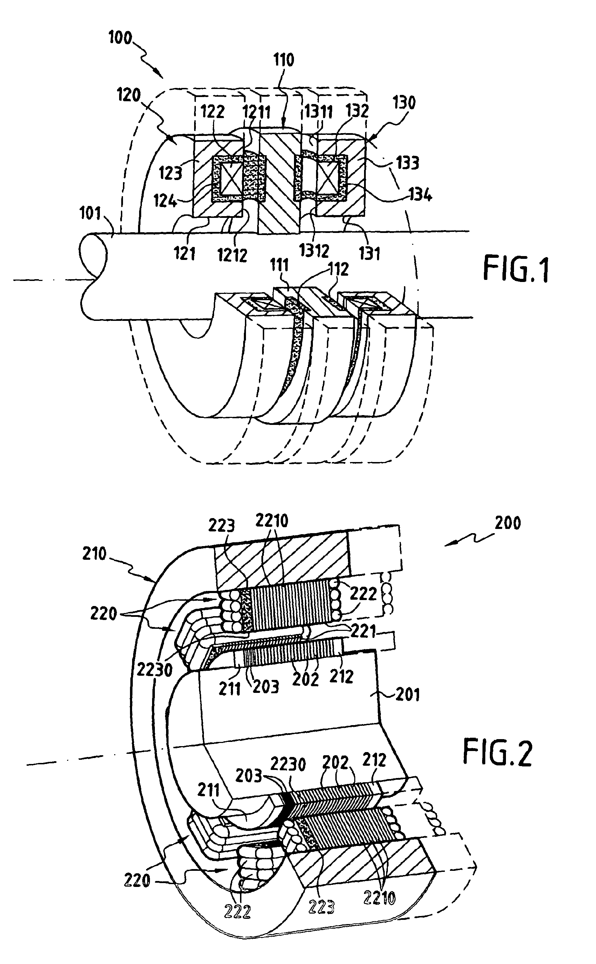

La figure 1 représente un premier exemple d'une structure de palier à auto-détection de position selon la présente invention appliquée à un palier axial tel qu'un dispositif de butée utilisée dans les machines tournantes pour contrôler la position axiale de l'arbre rotatif. Le palier axial 100 comprend deux électro-aimants 120 et 130 formant stator et comprenant chacun un circuit magnétique 121, respectivement 131, ainsi qu'une bobine 122, respectivement 132 pilotée en courant par un système d'asservissement bien connu en soi pour maintenir en position un rotor 110 en forme de disque solidaire d'un arbre 101.

En plus de sa fonction de palier proprement dite, le palier 100 est utilisé comme détecteur de position du type inductif sans qu'il soit nécessaire d'adjoindre aucune bobine supplémentaire. Cette fonction de détection est mise en oeuvre de façon connue comme expliqué précédemment, à savoir par mesure de la tension aux bornes de chaque bobine d'électro-aimant du palier dans des conditions pour lesquelles il y a quasi proportionnalité avec le déplacement du corps intercalé (rotor).

Conformément à la présente invention, chaque circuit magnétique 121, respectivement 131, qui présente habituellement une structure massive formée d'un seul matériau ferromagnétique tel que du fer, comprend deux parties 123 et 124, respectivement 133 et 134, constituées de matériaux ferromagnétiques ayant des propriétés magnétiques et électriques différentes. Plus précisément, chaque circuit magnétique 121, respectivement 131, comprend une première portion massive 123, respectivement 133, présentant ici en coupe la forme d'un U avec deux pièces polaires 1211, 1212, respectivement 1311, 1312. Cette première portion est formée avec un matériau ferromagnétique de perméabilité magnétique élevée (typiquement >1000), tel que du fer, afin d'assurer le trajet des champs magnétiques basses fréquences générés pour réaliser la fonction de palier proprement dite. En d'autres termes, la première portion 123, respectivement 133, est destinée à conserver la technologie classique du stator massif à perméabilité élevée pour le passage des champs magnétiques basses fréquences (généralement inférieurs à 200 Hz) lors du pilotage en courant du palier.

La seconde portion 124, respectivement 134, est quant à elle formée avec un matériau ferromagnétique qui présente une perméabilité magnétique plus faible que celle du matériau de la première portion, à savoir un matériau ayant un coefficient de perméabilité de l'ordre de 100 et, de préférence, inférieur à cette valeur. De plus, le matériau constitutif de cette seconde portion doit également présenter une résistivité électrique importante (ex. 50 Ωm) afin de favoriser le passage des hautes fréquences comme par exemple des fréquences d'environ 20 kHz qui correspondent à la pulsation du signal sinusoïdal injecté dans les bobines pour la détection de position. A cet effet, le matériau de la seconde portion peut être une poudre comprenant des grains en matériau magnétique, tels que des grains de fer, isolés électriquement entre eux qui présente une perméabilité réduite en comparaison de matériaux massifs tout en ayant une résistivité élevée du fait des grains isolés électriquement entre eux. On peut également utiliser tout type de matériaux frittés magnétiques doux à grains isolés électriquement.

Comme le matériau massif de la première portion constitue un blindage vis-à-vis des champs hautes fréquences (blindage par courant induit), on place de préférence la seconde portion au plus près de la bobine afin de pouvoir "canaliser" les lignes de champ magnétique hautes fréquences dans cette portion. De plus, dans cette configuration, la seconde portion ne fait pas obstacle aux champs magnétiques basses fréquences générés par le courant de palier qui sont concentrés naturellement vers la première portion constituée d'un matériau plus perméable. Toutefois, d'autres placements de la seconde portion dans le palier peuvent être envisagés.

Ainsi, avec la structure de l'invention, il est possible de "séparer" les lignes de champs magnétiques basses fréquences (fonction palier) des lignes de champs magnétiques hautes fréquences (fonction détecteur) au sein d'un même palier tout en gardant évidemment un seul bobinage et un seul amplificateur par électro-aimant.

Dans les dispositifs de butée axiale, on utilise en général un volant de butée massif (rotor 110). Dans un tel cas, il faut également prévoir un schéma de lignes de champs magnétiques équivalent au niveau du rotor, c'est-à-dire une première portion principale massive pour les lignes de champs magnétiques basses fréquence (fonction palier) et pour la tenue mécanique ainsi qu'une une seconde portion de perméabilité réduite mais de résistivité élevée qui favorise la pénétration des champs magnétiques hautes fréquences utilisés pour la détection de position (fonction détecteur). Comme illustré sur la figure 1, le rotor 110 comprend une première portion 111 en matériau massif tel que du fer et une seconde portion 112 formée, par exemple, d'une poudre de même type que celle utilisée pour la portion 124 du stator.

La configuration de palier qui vient d'être décrite en relation avec un palier axial utilisé dans un dispositif de butée peut être également appliquée à un palier radial. La figure 2 représente un exemple de réalisation d'un palier radial 200 ayant une structure conformément à la présente invention. Le palier radial 200 comprend un stator 210 et un rotor 201 qui sont en mouvement de rotation relatif l'un par rapport à l'autre. Le stator 210 est équipé d'électro-aimants 220 comprenant chacun un circuit magnétique 221 constitué d'un empilage de tôles ferromagnétiques 2210 entouré par une bobine d'excitation 222. Chaque électro-aimant est piloté en courant par un système d'asservissement connu pour maintenir en suspension le rotor 201 suivant une position radiale prédéterminée. La détection des déplacements radiaux du rotor 201 est réalisée par mesure de la tension, à une fréquence donnée, aux bornes de chaque bobine 222 du palier comme expliqué en détail dans le document US 5 844 339.

Le rotor 201 est équipé d'un empilage de tôles ferromagnétiques 202 qui s'étend sur une longueur axiale légèrement plus grande que celle de l'empilage de tôle 2210 du circuit magnétique 221. Le rotor 201 est maintenu par les champs magnétiques créés par les électro-aimants 220 disposés sur le stator 210.

De même que pour le palier axial décrit plus haut, le circuit magnétique 221 comprend une seconde portion 223 formée avec un matériau ferromagnétique qui présente une perméabilité magnétique plus faible que de la première portion correspondant à l'empilage de tôles ferromagnétiques 2210. Le matériau utilisé pour former cette seconde portion présente de préférence un coefficient de perméabilité de l'ordre de 100 et, de préférence, inférieur à cette valeur. De plus, ce matériau doit également avoir une résistivité électrique importante (ex. 50 Ωm) afin de favoriser le passage des hautes fréquences utilisées pour lors de l'injection du signal de détection dans le palier et qui est typiquement d'environ 20 kHz. A cet effet, la seconde portion 223 peut être formée d'une rondelle en poudre de fer 2230 qui présente une résistivité élevée par rapport à des matériaux massifs tout en ayant une perméabilité réduite. L'empilage de tôles ferromagnétiques 2210 forme avec la rondelle en poudre de fer 2230 une structure en sandwich qui peut être maintenue par deux bagues 211 et 212 en matériau non magnétique tel que de l'acier, du bronze ou de l'aluminium chacune située de chaque côté de la structure.

Au niveau du rotor 201, on peut rencontrer des problèmes de tenue mécanique limitée des pièces en poudre vis-à-vis des vitesses de rotation élevées imposées au rotor. Dans ce cas, à la place d'une poudre ferromagnétique, on peut utiliser des tôles ferromagnétiques de faible épaisseur pour réaliser la portion sensible aux champs magnétiques hautes fréquences. En effet, contrairement à la structure massive du rotor utilisée dans le cas d'un palier axial, le rotor 201 est équipé d'un empilage de tôles ferromagnétiques 202 destinées à être traversées par les champs magnétiques créés par les électro-aimants du stator 210. La séparation des champs magnétiques hautes et basses fréquences étant déjà réalisée au niveau du stator, on peut se contenter d'utiliser des tôles fines pour la réalisation d'un schéma de ligne de champ magnétique équivalent à celui défini dans le rotor, à savoir une première portion principale pour les champs basses fréquences (fonction palier) et une seconde portion à perméabilité réduite et résistivité élevée pour privilégier la pénétration des champs hautes fréquences (fonction détection). Comme illustré sur la figure 2, le rotor peut comprendre un empilage de tôles ferromagnétiques 203 qui présentent chacune une épaisseur plus faible que celle des tôles 202 utilisées dans le reste de l'empilage sur le rotor. Ainsi en réduisant l'épaisseur des tôles dans l'empilage du rotor sur une longueur axiale correspondant à la partie du rotor en regard de la portion 223 du stator, on forme une portion qui présente une perméabilité réduite (faible épaisseur de tôle) et une résistivité élevée (espacement entre les tôles). L'épaisseur des tôles ferromagnétiques 202 utilisées pour la portion principale du rotor destinée à recevoir les champs magnétiques basses fréquences est par exemple de l'ordre de 0.2 mm. Dans ce cas, à titre d'exemple, on choisira, pour la seconde portion destinée à servir au trajet des champs magnétiques hautes fréquences, des tôles 203 ayant une épaisseur réduite de moitié soit, dans l'exemple considéré, environ 0.1 mm.

Le principe de "séparation" des trajets des champs magnétiques basses et hautes fréquences dans le stator et le rotor qui vient d'être décrit ci-dessus en relation avec les exemples particuliers des figures 1 et 2 peut être généralisé à tout type de palier magnétique actif. La portion basse perméabilité et haute résistivité peut être standardisée au niveau dimensionnel ou en tout cas limitée en taille quelles que soient les dimensions du stator et/ou du rotor qui doivent être définies en fonction de la capacité de charge nécessaire à fournir par le palier. Cet aspect de l'invention est particulièrement intéressant dans le cas de pièces massives dont les dimensions influencent directement la valeur de l'inductance mesurée à haute fréquence (ex. 20 kHz).

Ainsi, comme illustré par les traits discontinus sur les figures 1 et 2, les dimensions des parties stator et rotor du palier peuvent être plus importantes sans qu'il soit nécessaire d'accroître celles des portions spécifiques réservées au passage des champs hautes fréquences. En effet, lorsque le palier comporte de telles portions, la tension haute fréquence que doit fournir l'amplificateur du palier pour la détection n'est plus liée à la taille de ce dernier mais uniquement à celle des portions basse perméabilité et haute résistivité. Il suffit, par conséquent, de définir des dimensions standard pour les portions basse perméabilité et haute résistivité qui permettent de garantir une inductance bien définie quelles que soient les dimensions du palier. On pourra alors choisir les valeurs de fréquences et d'amplitude pour le signal de détection, ce qui n'est pas possible avec les paliers auto-détecteur classiques dans lesquels la fréquence et l'amplitude de la tension de détection sont déterminées par le besoin du palier (fonction palier).

De plus, grâce à la structure bi-perméabilité du palier selon l'invention, le couplage entre l'inductance vue à la fréquence de détection (ex. 20 kHz) et le courant de palier est fortement diminué puisque la perméabilité de la portion basse fréquence reste toujours supérieure à la perméabilité de la portion de détection haute fréquence et ce, même si des phénomènes de saturation apparaissent dans le trajet basse fréquence. Il est alors possible de repousser la limite de l'induction au-delà de 1 tesla et de réduire, par conséquent, la taille du palier.

## Revendications

1. Palier magnétique actif (100) à auto-détection de position comprenant au moins des premier et second électro-aimants antagonistes (120, 130) formant stators disposés de part et d'autre d'un corps ferromagnétique (110) formant rotor maintenu sans contact entre ces électro-aimants, les premier et second électro-aimants (120, 130) comprenant chacun un circuit magnétique (121; 131), comprenant essentiellement un premier matériau ferromagnétique et définissant avec ledit corps ferromagnétique un entrefer, et une bobine d'excitation (122; 132) alimentée à partir d'un amplificateur de puissance dont le courant d'entrée est asservi en fonction de la position du corps ferromagnétique par rapport aux circuits magnétiques des premier et second électroaimants, la position du corps ferromagnétique (110) étant mesurée à partir de l'inductance détectée entre les deux électro-aimants (120, 130) en réponse à l'injection simultanément dans les deux électro-aimants antagonistes d'un courant sinusoïdal ayant une fréquence supérieure à la bande passante en boucle fermée du système,
**caractérisé en ce que** le circuit magnétique (121; 131) de chaque électro-aimant comprend en outre une portion (124; 134) au voisinage de la bobine d'excitation (122; 132) utilisant un second matériau ferromagnétique ayant une perméabilité magnétique inférieure à celle du premier matériau et une résistivité électrique supérieure à celle du premier matériau de manière à favoriser le passage des champs magnétiques hautes fréquences générés dans le palier.

2. Palier selon la revendication 1, **caractérisé en ce que** la portion (124; 134) de faible perméabilité et haute résistivité est formée d'une pièce en poudre comprenant des grains en matériau magnétique isolés électriquement entre eux.

3. Palier selon la revendication 2, **caractérisé en ce**

**que** la poudre comprend des grains de fer isolés électriquement entre eux.

4. Palier selon l'une des revendications 1 à 3, **caractérisé en ce que** le corps ferromagnétiques (110) formant rotor comprend au moins une portion (112) ayant une perméabilité inférieure et une résistivité supérieure à celle du reste dudit corps de manière à favoriser le passage des champs magnétiques hautes fréquences, ladite portion étant disposée sensiblement en regard de la portion (124; 134) de faible perméabilité et haute résistivité formée sur l'électro-aimant.

5. Palier selon la revendication 4, **caractérisée en ce que** la portion (112) de faible perméabilité et haute résistivité du corps (110) formant rotor est formée d'une pièce en poudre comprenant des grains en matériau magnétique isolés électriquement entre eux.

6. Palier selon la revendication 5, **caractérisé en ce que** la poudre comprend des grains de fer isolés électriquement entre eux.

7. Palier selon la revendication 4, **caractérisé en ce que** le corps formant rotor (201) comprend un empilage (202) de tôles ferromagnétiques, les tôles présentes dans la portion (223) de faible perméabilité et haute résistivité ayant une épaisseur inférieure à celle des autres tôles de l'empilage (202).

8. Palier selon l'une des revendications 1 à 7, **caractérisé en ce que** la ou les portions faible perméabilité et haute résistivité présentent une perméabilité magnétique de l'ordre de 100.

9. Palier selon l'une des revendications 1 à 8, **caractérisé en ce que** la ou les portions de faible perméabilité et haute résistivité présentent une résistivité électrique d'environ 50 Ωm.

10. Palier selon l'une des revendications 1 à 9, **caractérisé en ce que** le palier magnétique actif (100) est de type axial.

11. Palier selon l'une des revendications 1 à 9, **caractérisé en ce que** le palier magnétique actif (200) est de type radial.

## Claims

1. An active magnetic bearing (100) with autodetection of position, the bearing comprising at least first and second opposing electromagnets (120, 130) forming stators disposed on either side of a ferromagnetic body (110) forming a rotor and held without contact between said electromagnets, the first and second electromagnets (120, 130) each comprising a magnetic circuit (121; 131) essentially constituted by a first ferromagnetic material and co-operating with said ferromagnetic body to define an airgap, together with an excitation coil (122; 132) powered from a power amplifier whose input current is servo-controlled as a function of the position of the ferromagnetic body relative to the magnetic circuits of the first and second electromagnets, the position of the ferromagnetic body (110) being measured from the inductance detected between the two electromagnets (120, 130) in response to simultaneous injection into both opposing electromagnets of a sinusoidal current at a frequency that is greater than the closed loop passband of the system,

the bearing being **characterized in that** the magnetic circuit (121; 131) of each electromagnet further includes a portion (124; 134) in the vicinity of the excitation coil (122; 132) that uses a second ferromagnetic material having magnetic permeability that is lower than that of the first material and electrical resistivity that is higher than that of the first material so as to encourage the passage of the high frequency magnetic fields that are generated in the bearing.

2. A bearing according to claim 1, **characterized in that** the low permeability and high resistivity portion (124; 134) is formed by a piece made of powder comprising grains of magnetic material that are electrically insulated from one another.

3. A bearing according to claim 2, **characterized in that** the powder comprises grains of iron that are electrically insulated from one another.

4. A bearing according to any one of claims 1 to 3, **characterized in that** the ferromagnetic body (110) forming the rotor includes at least one portion (112) of permeability that is smaller and of resistivity that is greater than the remainder of said body so as to encourage the passage of high frequency magnetic fields, said portion being disposed substantially in register with the low permeability and high resistivity portion (124; 134) formed in the electromagnet.

5. A bearing according to claim 4, **characterized in that** the low permeability and high resistivity portion (112) of the rotor-forming body (110) is formed by a part made of powder comprising grains of magnetic material that are electrically insulated from one another.

6. A bearing according to claim 5, **characterized in that** the powder comprises grains of iron that are electrically insulated from one another.

7. A bearing according claim 4, **characterized in that** the rotor-forming body (201) includes a stack (202) of ferromagnetic laminations, the laminations present in the low permeability and high resistivity portion (223) presenting thickness that is smaller than the thickness of those other laminations in the stack (202).

8. A bearing according to any one of claims 1 to 7, **characterized in that** the low permeability and high resistivity portion(s) present(s) magnetic permeability of about 100.

9. A bearing according to any one of claims 1 to 8, **characterized in that** the low permeability and high resistivity portion(s) present(s) electrical resistivity of about 50 $\Omega$m.

10. A bearing according to any one of claims 1 to 9, **characterized in that** the active magnetic bearing (100) is of the axial type.

11. A bearing according to any one of claims 1 to 9, **characterized in that** the active magnetic bearing (200) is of the radial type.

## Patentansprüche

1. Aktives Magnetlager (100) mit automatischer Lageerfassung, mit wenigstens einem ersten und einem zweiten Elektromagneten (120, 130), die gegenwirkend sind, Statoren bilden und auf beiden Seiten eines einen Rotor bildenden ferromagnetischen Körpers (110) angeordnet sind, welcher zwischen diesen Elektromagneten berührungslos gehalten ist, wobei der erste und der zweite Elektromagnet (120, 130) jeweils folgendes umfassen, nämlich einen Magnetkreis (121; 131), der im wesentlichen ein erstes ferromagnetisches Material aufweist und mit dem ferromagnetischen Körper einen Luftspalt definiert, sowie eine Erregerspule (122; 132), die von einem Leistungsverstärker gespeist wird, dessen Eingangsstrom von der Position des ferromagnetischen Körpers gegenüber den Magnetkreisen des ersten und des zweiten Elektromagneten abhängig ist, wobei die Position des ferromagnetischen Körpers (110) anhand der zwischen den beiden Elektromagneten (120, 130) erfaßten Induktivität als Reaktion auf das gleichzeitige Einspeisen -in die beiden gegenwirkenden Elektromagneten- eines sinusförmigen Stroms mit einer höheren Frequenz als das Durchlaßband in geschlossenem Kreis des Systems gemessen wird,

**dadurch gekennzeichnet, daß** der Magnetkreis (121; 131) eines jeden Elektromagneten ferner einen Abschnitt (124; 134) in der Nähe der Erregerspule (122; 132) umfaßt, der ein zweites ferromagnetisches Material verwendet, das eine geringere magnetische Permeabilität als das erste Material und einen höheren spezifischen elektrischen Widerstand als das erste Material aufweist, so daß der Durchlaß der in dem Lager erzeugten hochfrequenten Magnetfelder begünstigt wird.

2. Lager nach Anspruch 1, **dadurch gekennzeichnet, daß** der Abschnitt (124; 134) mit geringer Permeabilität und hohem spezifischen Widerstand von einem Teil aus Pulver gebildet ist, das elektrisch voneinander isolierte Körner aus magnetischem Material aufweist.

3. Lager nach Anspruch 2, **dadurch gekennzeichnet, daß** das Pulver elektrisch voneinander isolierte Eisenkörner aufweist.

4. Lager nach einem der Ansprüche 1 bis 3, **dadurch gekennzeichnet, daß** der einen Rotor bildende ferromagnetische Körper (110) wenigstens einen Abschnitt (112) umfaßt, der eine geringere Permeabilität und einen höheren spezifischen Widerstand als der restliche Körper aufweist, um den Durchgang der hochfrequenten Magnetfelder zu begünstigen, wobei der Abschnitt im wesentlichen gegenüber dem an dem Elektromagneten ausgebildeten Abschnitt (124; 134) mit geringer Permeabilität und hohem spezifischen Widerstand angeordnet ist.

5. Lager nach Anspruch 4, **dadurch gekennzeichnet, daß** der Abschnitt (112) mit geringer Permeabilität und hohem spezifischem Widerstand des einen Rotor bildenden Körpers (110) von einem Teil aus Pulver gebildet ist, das elektrisch voneinander isolierte Körner aus magnetischem Material aufweist.

6. Lager nach Anspruch 5, **dadurch gekennzeichnet, daß** das Pulver elektrisch voneinander isolierte Eisenkörner aufweist.

7. Lager nach Anspruch 4, **dadurch gekennzeichnet, daß** der einen Rotor bildende Körper (201) ein Paket (202) aus ferromagnetischen Blechen umfaßt, wobei die in dem Abschnitt (223) mit geringer Permeabilität und hohem spezifischen Widerstand vorhandenen Bleche eine geringere Dicke als die anderen Bleche des Pakets (202) aufweisen.

8. Lager nach einem der Ansprüche 1 bis 7, **dadurch gekennzeichnet, daß** der oder die Abschnitt(e) mit geringer Permeabilität und hohem spezifischen Widerstand eine magnetische Permeabilität in der Größenordnung von 100 aufweisen.

9. Lager nach einem der Ansprüche 1 bis 8, **dadurch gekennzeichnet, daß** der oder die Abschnitt(e) mit geringer Permeabilität und hohem spezifischen Widerstand einen spezifischen elektrischen Widerstand von etwa 50 $\Omega$m aufweisen.

10. Lager nach einem der Ansprüche 1 bis 9, **dadurch gekennzeichnet, daß** das aktive Magnetlager (100) axialer Art ist.

11. Lager nach einem der Ansprüche 1 bis 9, **dadurch gekennzeichnet, daß** das aktive Magnetlager (200) radialer Art ist.

FIG.1

FIG.2

FIG.3
ART ANTERIEUR

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5844339 A

- FR 2716700